(19) Europäisches Patentamt
European Patent Office
Office européen des brevets

(11) EP 2 452 975 A1

(12) EUROPEAN PATENT APPLICATION

(43) Date of publication:
16.05.2012 Bulletin 2012/20

(51) Int Cl.:
*C08L 23/10* (2006.01) *C08F 297/08* (2006.01)

(21) Application number: 10190981.0

(22) Date of filing: 12.11.2010

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Borealis AG
1220 Vienna (AT)

(72) Inventors:
- Leskinen, Pauli
00700 Helsinki (FI)
- Grein, Christelle
A-4020, Linz (AT)

(74) Representative: Lux, Berthold et al
Maiwald Patentanwalts GmbH
Elisenhof
Elisenstraße 3
80335 München (DE)

# (54) Soft heterophasic propylene copolymers

(57) Heterophasic propylene copolymer comprising
a) a propylene homo- or copolymer matrix with an $MFR_2$ of ≥ 150 g/10 min according to ISO 1133 (230°C, 2.16 kg load) and
b) a trimodal elastomeric propylene copolymer dispersed in said matrix,
wherein
(i) the xylene cold soluble fraction of the heterophasic propylene copolymer at room temperature is present in an amount of 20 to 80 wt% of the of the heterophasic propylene copolymer,
(ii) the amorphous phase of the xylene cold soluble fraction of the heterophasic propylene copolymer has an intrinsic viscosity measured according to ISO 1628-1 (at 135°C in tetraline) of at least 2.5 dl/g
(iii) said of the heterophasic propylene copolymer has a flexural modulus lower than 800 MPa according to ISO 178, a melting temperature measured by DSC from 155 to 170°C and a total ethylene content from 10 to 35 wt%; and a process for its production.

EP 2 452 975 A1

## Description

The present invention relates to non-sticky heterophasic propylene copolymers with high softness together with high melting temperatures as well as to a process for producing these heterophasic propylene copolymers and their use.

In principle, heterophasic or block propylene copolymers have a two-phase structure, consisting of a polypropylene matrix and an elastomeric phase which is dispersively distributed. The elastomeric phase contains a propylene copolymer rubber, like ethylene propylene rubber (EPR). The rubber component is thus a copolymer of propylene and a further alpha-olefin, like ethylene and is mainly in amorphous (= xylene cold soluble, XCS) form.

The XCS fraction of such heterophasic propylene copolymers comprises besides the total amount of rubber dispersed within the matrix also amorphous parts of the polypropylene matrix. However, as it is common in the state of the art, as a first approximation, that the XCS fraction of the heterophasic propylene copolymer indicates the total amount of rubber, since the XCS fraction is easy to measure and frequently used as a parameter indicating the amount of elastomeric components within heterophasic compositions.

As is well known from the prior art a high amount of xylene cold soluble fraction (XCS) is desirable for the production of soft heterophasic propylene copolymers. The threshold content of XCS fraction is related to the stickiness of the final polymer. The tackiness and stickiness of the polymer results in particle agglomeration and/or adhesion of the formed heterophasic copolymer to the walls of the reactors and leads to sheeting in the transfer lines, hoppers and vessels. In severe cases such reactor fouling may also cause blocking of the system (in the reactor or downstream equipment), respectively reactor shut-down, which is detrimental to production efficiency.

Thus there is an ongoing need for heterophasic propylene copolymers with high softness, thus containing a large amount of XCS fraction, respectively of rubber phase and being simultaneously not sticky, thus having excellent process properties.

A further desirable property of the heterophasic propylene copolymers is an improved thermal behaviour, respectively a high melting temperature (Tm).

Such demands can be challenging, since many polymer properties are directly or indirectly interrelated. Due to these interrelations it has been problematic to develop polymers with the combination of high softness and non-stickiness with high melting temperature.

Accordingly, the object of the present invention is to provide heterophasic propylene copolymers having a high melting temperature (Tm) and at the same time a low flexural modulus, i.e. low stiffness and thus high softness, and being simultaneously not sticky.

The finding of the present invention is that these properties, i.e. high melting temperature, low flexural modulus and non-stickiness, can be obtained with heterophasic propylene copolymers comprising a unimodal polypropylene matrix and a trimodal rubber phase.

Thus the present invention is directed to a heterophasic propylene copolymer comprising

a) a propylene homo- or copolymer matrix with an $MFR_2$ of ≥ 150 g/10 min according to ISO 1133 (230°C, 2.16 kg load) and

b) a trimodal elastomeric propylene copolymer dispersed in said matrix,
wherein

(i) the xylene cold soluble fraction of the heterophasic propylene copolymer at room temperature is present in an amount of 20 to 80 wt% of the of the heterophasic propylene copolymer,

(ii) the amorphous phase of the xylene cold soluble fraction of the heterophasic propylene copolymer has an intrinsic viscosity measured according to ISO 1628-1 (at 135°C in tetraline) of at least 2.5 dl/g

(iii) said of the heterophasic propylene copolymer has a flexural modulus lower than 800 MPa according to ISO 178, a melting temperature measured by DSC from 155 to 170°C and a total ethylene content from 10 to 30 wt%.

It has surprisingly been found that the heterophasic propylene copolymer of the present invention is featured with high softness, excellent impact behaviour in combination with high thermo-mechanical stability and non-stickiness.

In the following the invention is described in more detail.

A heterophasic propylene copolymer (HECO) according to the invention comprises a propylene homo- or copolymer matrix and dispersed therein an elastomeric propylene copolymer.

The propylene matrix can be a propylene homopolymer or a propylene copolymer. However it is preferred that the propylene matrix is a propylene homopolymer.

The expression homopolymer used in the instant invention relates to a polypropylene that consists substantially, i.e. of at least 97 wt%, preferably of at least 98 wt%, more preferably of at least 99 wt%, still more preferably of at least 99.8 wt% of propylene units. In a preferred embodiment only propylene units in the propylene homopolymer are detectable. The comonomer content can be determined with FT infrared spectroscopy.

Where the propylene matrix comprises a propylene copolymer, the propylene copolymer comprises monomers copolymerisable with propylene, for example comonomers such as ethylene and $C_4$ to $C_{20}$ alpha-olefins, in particular ethylene and $C_4$ to $C_{10}$ alpha-olefins, e.g. 1-butene or 1-hexene. The comonomer content in the propylene matrix is in such a case preferably relatively low, i.e. up to 4.0 wt%, more preferably 0.5 to 3.5 wt%, still more preferably 0.5 to 2.5 wt%, yet more preferably 0.5 to 2.0 wt%.

The propylene matrix can be unimodal or multimodal, like bimodal. However it is preferred that the propylene matrix is unimodal. Concerning the definition of unimodal and multimodal, like bimodal, it is referred to the definition below.

When the matrix is unimodal with respect to the molecular weight distribution, it may be prepared in a single stage process e.g. as slurry or gas phase process in a slurry or gas phase reactor. Preferably, the unimodal matrix is polymerised as a slurry polymerisation. Alternatively, the unimodal matrix may be produced in a multistage process using at each stage process conditions which result in similar polymer properties.

Where the propylene matrix comprises two or more different propylene polymers these may be polymers with different monomer make up and/or with different molecular weight distributions. These components may have identical or differing monomer compositions and tacticities.

Moreover it is preferred that the polymer matrix has a rather high melt flow rate (MFR), i.e. a rather low molecular weight.

The melt flow rate measured under a load of 2.16 kg at 230°C (ISO 1133) is denoted as $MFR_2$ (230°C). Accordingly, it is preferred that in the present invention the propylene matrix has an $MFR_2$ (230°C) equal to or above 150 g/10 min. Preferably, the propylene matrix has an $MFR_2$ (230°C) equal to or above 200 g/10 min, more preferably equal to or above 300 g/10 min. The $MFR_2$ (230°C) can be up to 1000 g/10 min.

As a further requirement of the heterophasic propylene copolymer the elastomeric copolymer must fulfill some properties so that the desired results can be achieved.

The trimodal elastomeric copolymer comprises 3 ethylene/propylene copolymer fractions, which differ from each other in view of the molecular weight distribution (MWD) and/or the comonomer content.

The expression "multimodal" or "bimodal" or "trimodal" used herein refers to the modality of the polymer, i.e.

■ the form of its molecular weight distribution curve, which is the graph of the molecular weight fraction as a function of its molecular weight,
and / or
■ the form of its comonomer content distribution curve, which is the graph of the comonomer content as a function of the molecular weight of the polymer fractions.

When the distribution curves (molecular weight or comonomer content) from these fractions are superimposed to obtain the molecular weight distribution curve or the comonomer content distribution curve of the final elastomeric copolymer, these curves may show two, three or more maxima or at least be distinctly broadened when compared with curves for the individual fractions. Such a polymer, produced in two, three or more sequential steps, is called bimodal, trimodal or multimodal, depending on the number of steps.

The properties of the elastomeric propylene copolymer mainly influence the xylene cold soluble content as well as the amorphous phase of the final heterophasic polypropylene copolymer. Thus according to the present invention the amorphous phase of the heterophasic propylene copolymer is regarded as the elastomeric propylene copolymer of the heterophasic propylene copolymer.

The xylene cold soluble content includes besides the total amount of elastomeric propylene copolymer dispersed within the matrix also polymer chains of the polypropylene matrix with low molecular weight and low stereoregularity, so that normally the XCS value is slightly higher than the amorphous (AM) value.

The trimodal elastomeric propylene copolymer comprises
(x) a first ethylene/propylene copolymer fraction (EPR1)
(y) a second ethylene/propylene copolymer fraction (EPR2)
(z) a third ethylene/propylene copolymer fraction (EPR3),
wherein

- the first ethylene/propylene copolymer fraction comprises 15 to 35 wt% of ethylene, preferably 20 to 30 wt% of ethylene comonomer and an intrinsic viscosity of the amorphous phase of 2 to 4 dl/g according to ISO 1628-1 (in tetraline at 135°C);
- the first ethylene/propylene copolymer fraction differs from the second and the third ethylene/polypropylene copolymer fraction by the comonomer content and/or the intrinsic viscosity of the amorphous phase, whereby the second ethylene/propylene copolymer has a higher comonomer content (wt%) compared to the first ethylene/propylene copolymer and the third ethylene/propylene copolymer has a higher comonomer content than the second ethylene/ propylene copolymer.

According to the invention EPR1 is a propylene rich fraction and EPR3 is an ethylene rich fraction comprising 56 to 85 wt% of ethylene, thus EPR2 comprises propylene and ethylene in at least approximately equal amounts, e.g. 45 to 64 wt% of propylene and 55 to 36 wt% of ethylene, preferably 50 to 64 wt% of propylene and 50 to 36 wt% of ethylene.

Particular good results are achievable in case the ethylene/propylene copolymer fractions EPR1, EPR2 and EPR3 are present in specific amounts.

Thus it is preferred that the trimodal elastomeric propylene copolymer comprises

(x) 40 to 80 wt%, preferably 60 to 75 wt% of EPR1

(y) 10 to 35 wt%, preferably 15 to 30 wt% of EPR2 and

(z) 5 to 30 wt%, preferably 10 to 30 wt% of EPR3,

the sum of (x) + (y) + (z) being 100%.

The heterophasic propylene copolymer comprising the polypropylene matrix and the trimodal elastomeric propylene copolymer as defined above is characterized by a xylene cold soluble fraction at room temperature being present in an amount of 20 to 80 wt% of the heterophasic propylene copolymer.

Preferably the XCS fraction is present in an amount of 30 to 70 wt% and more preferably in an amount of 35 to 60 wt% of the heterophasic propylene copolymer.

Furthermore the amorphous phase of the XCS fraction of the heterophasic propylene copolymer has an intrinsic viscosity measured according to ISO 1628-1 (at 135°C in tetraline) of at least 2.5 dl/g, preferably at least 2.6 dl/g up to 5.0 dl/g, preferably up to 4.0 dl/g.

The heterophasic propylene copolymer of the present invention is further featured by a flexural modulus according to ISO 178 of lower than 800 MPa, preferably lower than 700 MPa, more preferably lower than 600 MPa and most preferably lower than 500 MPa.

The desired heterophasic propylene copolymer is also thermo-mechanically stable. Accordingly the heterophasic propylene copolymer has a melting point of at least 155°C, preferably at least 158°C and more preferably of at least 160°C up to 170°C.

The total ethylene comonomer content of the heterophasic propylene copolymer is within the range of 10 to 35 wt%, preferably 13 to 25 wt%.

The $MFR_2$ of the final heterophasic propylene copolymer is in the range of 0.3 to 30 g/10 min, preferably in the range of 0.5 to 25 g/10 min and more preferably in the range of 1 to 20 g/10 min.

If desired, the final heterophasic propylene copolymer can be visbroken according to known techniques in order to reach a higher $MFR_2$ value suited for the selected application of the heterophasic propylene copolymer.

The chemical degradation of the polymer (visbreaking) is carried out in the presence of free radical initiators, such as peroxides. Examples of radical initiators that can be used for this purpose are 2,5-dimethyl-2,5-di(tert-butylperoxide)-hexane and dicumyl-peroxide. The degradation treatment is carried out by using the appropriate quantities of free radical initiators, and preferably takes place in an inert atmosphere, such as nitrogen. Methods, apparatus, and operating conditions known in the art can be used to carry out this process.

The $MFR_2$ after visbreaking can be in the range from 10 to 50 g/10 min, preferably from 15 to 45 g/10 min and more preferably from 20 to 40 g/10 min.

Additionally it is preferred that the heterophasic propylene copolymer of the present invention has a rather high impact strength measured according to Charpy impact test according to ISO 179 (1 eA) at 23°C of at least 50 $kJ/m^2$, more preferably of at least 60 $kJ/m^2$, even more preferably of at least 70 $kJ/m^2$ and most preferably of at least 75 $kJ/m^2$. The impact strength according to Charpy impact test according to ISO 179 (1 eA) at -20°C is preferably at least 30 $kJ/m^2$, more preferably of at least 35 $kJ/m^2$, even more preferably of at least 40 $kJ/m^2$ and most preferably of at least 45 $kJ/m^2$.

The heterophasic propylene copolymer of the present invention is furthermore featured by excellent process properties, i.e. the copolymer is non-sticky and causes no reactor fouling. The heterophasic propylene copolymer of the present invention as defined above may contain up to 2.0 wt% of additives commonly employed in the polyolefin field, like antioxidants, light stabilizers, nucleating agents, slip agents, colorants and fillers.

The main application of the heterophasic propylene copolymer of the invention is the production of films, particularly soft films, extruded articles such as tubes and moulded articles, particularly injection-moulded items. The injection-moulded articles comprising the heterophasic propylene copolymer of the invention have good flexibility and excellent impact properties at low temperature.

The heterophasic propylene copolymer as defined above is preferably produced by a sequential polymerisation process as defined below.

In such sequential polymerisation process the propylene matrix is produced in at least one slurry reactor and

subsequently the elastomeric copolymer is produced in at least three gas phase reactors.

Accordingly the present invention is further directed to a sequential polymerisation process for producing a heterophasic propylene copolymer according to the present invention, said heterophasic propylene copolymer comprises a propylene matrix and a trimodal elastomeric propylene copolymer dispersed in said matrix, wherein said process comprises the steps of

- polymerising propylene and optionally an ethylene comonomer in a first slurry reactor obtaining as slurry reactor product the propylene homo- or copolymer matrix
- transferring the slurry reactor product into a 1$^{st}$ GPR
- producing a first ethylene/propylene-copolymer fraction in the propylene matrix in said 1$^{st}$ GPR
- transferring the 1$^{st}$ GPR product into a 2$^{nd}$ GPR
- producing a second ethylene/propylene-copolymer fraction in the presence of said 1$^{st}$ GPR product in said 2$^{nd}$ GPR,
- transferring the 2$^{nd}$ GPR product into a 3$^{rd}$ GPR
- producing a third ethylene/propylene-copolymer fraction in the presence of said 2$^{nd}$ GPR product in said 3$^{rd}$ GPR,
- said 1$^{st}$, 2$^{nd}$ and 3$^{rd}$ ethylene/propylene mixtures have different compositions and
- recovering the heterophasic propylene copolymer for further processing.

For preferred embodiments of the heterophasic propylene copolymer, the polypropylene matrix, the first ethylene/propylene-copolymer fraction (EPR1), the second ethylene/propylene-copolymer fraction (EPR2), and the third ethylene/propylene-copolymer fraction (EPR3), reference is made to the definitions given above.

The term "sequential polymerisation process" indicates that the heterophasic propylene copolymer is produced in at least four reactors connected in series. Accordingly the present process comprises at least a first slurry reactor, a first gas phase reactor, a second gas phase reactor and a third gas phase reactor.

The first slurry reactor can be any continuous or simple stirred batch tank reactor or loop reactor operating in bulk or slurry. Bulk means a polymerisation in a reaction medium that comprises of at least 60 % (w/w) monomer. According to the present invention the slurry reactor is preferably a (bulk) loop reactor.

The second reactor, the third reactor and the fourth reactor are gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

A preferred sequential polymerisation process is a "loop-gas phase"-process, such as developed by Borealis (known as BORSTAR® technology) described e.g. in patent literature, such as in EP 0 887 379, WO 92/12182, WO 99/24478, WO 99/24479 or in WO 00/68315.

A further suitable slurry-gas phase process is the Spheripol® process of Basell.

With respect to the above-mentioned preferred slurry-gas phase process, the following general information can be provided with respect to the process conditions.

Temperature of from 40°C to 110°C, preferably between 50°C and 100°C, in particular between 60°C and 90°C, with a pressure in the range of from 20 to 80 bar, preferably 30 to 60 bar, with the option of adding hydrogen in order to control the molecular weight in a manner known per se.

The reaction product of the slurry polymerisation, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 8 to 35 bar, again with the option of adding hydrogen in order to control the molecular weight in a manner known per se.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

If desired, the polymerisation may be effected in a known manner under supercritical conditions in the slurry, preferably loop reactor, and/or as a condensed mode in the gas phase reactor.

Preferably the process comprises also a prepolymerisation step.

In a preferred embodiment, the prepolymerisation is conducted as bulk slurry polymerisation in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

According to the present invention the heterophasic polypropylene copolymer is obtained in a sequential polymerisation process, as described above, in the presence of a catalyst system comprising a Ziegler-Natta procatalyst

(r), an organometallic cocatalyst (s) and an external donor (t).

The Ziegler-Natta procatalyst (r) used according to the present invention is typically a stereospecific, high yield Ziegler-Natta procatalyst comprising as essential component a solid transition metal component. This type of procatalysts comprise, as described in detail below, in addition to the solid transition metal (like Ti) component a cocatalyst(s) (s) as well external donor(s) (t) as stereoregulating agent.

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754 and WO 2004/029112.

It is also possible that solid catalysts are self supported, i.e. the catalysts are not supported on an external support, but are prepared via emulsion-solidification technology, as described for example in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

Preferably the Ziegler-Natta procatalyst (r) used for the present invention is a Ziegler-Natta procatalyst, which contains a trans-esterification product of a $C_1$-$C_2$-alcohol and a phthalic ester as internal donor and which is optionally modified with a vinyl compound of formula $CH_2$=CH-$CHR^1R^2$, wherein $R^1$ and $R^2$ together form a 5- or 6-membered saturated, unsaturated or aromatic ring or independently represent an alkyl group comprising 1 to 4 carbon atoms.

Such a preferred procatalyst (r) used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

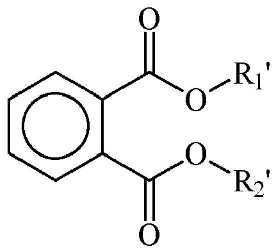

(I)

wherein $R_1$' and $R_2$' are independently at least a $C_5$ alkyl under conditions where a transesterification between said $C_1$ to $C_2$ alcohol and said dialkylphthalate of formula (I) takes place to form the internal donor

c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanised carrier

  (i) a dialkylphthalate of formula (I) with $R_1$' and $R_2$' being independently at least a $C_5$-alkyl, like at least a $C_8$-alkyl, or preferably
  (ii) a dialkylphthalate of formula (I) with $R_1$' and $R_2$' being the same and being at least a $C_5$-alkyl, like at least a $C_8$-alkyl

or more preferably
(iii) a dialkylphthalate of formula (I) selected from the group consisting of propylhexylphthalate (PrHP), di(ethylhexyl)phthalate (DOP), di-isodecylphthalate (DIDP), and ditridecylphthalate (DTDP), yet more preferably the dialkylphthalate of formula (I) is di(ethylhexyl)phthalate (DOP) or di-iso-octylphthalate, in particular diethylhexylphthalate,
to form a first product

- subjecting said first product to suitable transesterification conditions, i.e. to a temperature between 100 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

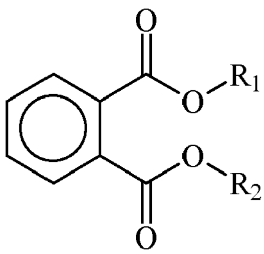

(II)

with $R_1$ and $R_2$ being methyl or ethyl, preferably ethyl,
the dialkylphthalat of formula (II) being the internal donor and
- recovering said transesterification product as the procatalyst composition.

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620. This crystallized adduct is preferably used as the catalyst carrier and reacted to the procatalyst useful in the present invention as described in WO 92/19658 and WO 92/19653.

The transesterification is performed at a temperature above 100°C, advantageously between 130 to 150 °C.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5% by weight of titanium at the most, preferably 2.2% by weight at the most and more preferably 2.0 % by weight at the most. Its donor content is preferably between 4 to 12% by weight and more preferably between 6 and 10 % by weight.

More preferably the procatalyst used according to the invention has been produced by using ethanol as the alcohol and di(ethylhexyl)phthalate (DOP) as dialkylphthalate of formula (I), yielding diethyl phthalate (DEP) as the internal donor compound.

Still more preferably the catalyst used according to the invention is a catalyst prepared according to WO92/19653 as disclosed in WO 99/24479; especially with the use of di(ethylhexyl)phthalate as dialkylphthalate of formula (I) according to WO 92/19658) or the catalyst Polytrack 8502, commercially available from Grace.

The Ziegler-Natta procatalyst suitable for producing the heterophasic polypropylene copolymer according to the invention is preferably modified by prepolymerising it with a vinyl compound of the formula:

$$CH_2=CH-CHR^1R^2$$

wherein $R^1$ and $R^2$ together form a 5- or 6-membered saturated, unsaturated or aromatic ring or independently represent an alkyl group comprising 1 to 4 carbon atoms, and the modified catalyst is used for the preparation of the polymer composition. The polymerised vinyl compound can act as a nucleating agent.

The vinyl compound suitable for modifying the procatalyst is preferably selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

Concerning the modification of the procatalyst reference is made to the international applications WO 99/24478, WO 99/24479, WO 99/24503 and particularly WO 00/68315, incorporated herein by reference with respect to the reaction conditions concerning the modification of the catalyst as well as with respect to the polymerisation reaction.

For the production of the heterophasic polypropylene copolymers according to the invention the catalyst system used comprises in addition to the Ziegler-Natta procatalyst (r), as described above, an organometallic cocatalyst (s).

The organometallic compound is preferably an organoaluminium compound selected from the group consisting of trialkylaluminium, like triethylaluminium (TEA), triisobutylaluminium, tri-n-butylaluminium; dialkyl aluminium chloride, like dimethyl- or diethyl aluminium chloride; and alkyl aluminium sesquichloride. More preferably the cocatalyst is triethylaluminium or diethylaluminium chloride, most preferably triethylaluminium is used as cocatalyst.

Furthermore the catalysts system used comprises as external donor preferably an external donor represented by formula (III)

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl. More preferably both $R^1$ and $R^2$ are the same, yet more preferably both $R^3$ and $R^4$ are an ethyl group.

Most preferably diethylaminotriethoxysilane is used as external donor.

The external donor may be produced according to the methods disclosed in EP 1538 167. The content of this document is herein included by reference.

The catalyst components can be all introduced to the prepolymerisation step.

However, where the procatalyst and the cocatalyst can be fed separately it is possible that only a part of the cocatalyst is introduced into the prepolymerisation stage and the remaining part into subsequent polymerisation stages. Also in such cases it is necessary to introduce so much cocatalyst into the prepolymerisation stage that a sufficient polymerisation reaction is obtained therein.

It is possible to add other components also to the prepolymerisation stage. Thus, hydrogen may be added into the prepolymerisation stage to control the molecular weight of the prepolymer as is known in the art. Further, antistatic additive may be used to prevent the particles from adhering to each other or to the walls of the reactor.

According to a preferred embodiment of the present invention no external donor is added to the prepolymerisation reactor, to the slurry polymerisation reactor and to the third gas phase reactor.

In this case the external donor is fed to the first and to the second gas phase reactor in order to control the production rate. The ratio of amount of external donor fed to the first GPR to the amount of external donor fed to the second GPR is in the range of 2.5 to 6 (wt-ppm), preferably in the range of 2.8 to 5.5 (wt-ppm) and more preferably in the range of 3.0 to 5.0 (wt-ppm).

As alternative, a small amount of the total amount of external donor can be fed to the prepolymerisation reactor or to the slurry reactor and the remaining amount is fed to the first and second GPR with a wt-ppm ratio in the range of 2.5 to 6. Such a small amount is preferably in the range of 0.5 to 10 wt% of the total amount, preferably in the range of 1 to 5 wt% of the total amount.

Additives, as defined above, are added to the heterophasic polypropylene copolymer, which is collected from the final reactor of the series of reactors. Preferably, these additives are mixed into the composition prior to or during the extrusion process in a one-step compounding process. Alternatively, a master batch may be formulated, wherein the heterophasic propylene copolymer is first mixed with only some of the additives.

For mixing, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive heterophasic propylene copolymers.

Heterophasic propylene copolymers according to the invention may be pelletized and compounded using any of the variety of compounding and blending methods well known and commonly used in the resin compounding art.

**EXAMPLES:**

**A.METHODS**

**Melt Flow Rate ($MFR_2$)**

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

**Comonomer content**

The comonomer contents of the copolymer was determined by quantitative Fourier transform infrared spectroscopy (FTIR) calibrated to results obtained from quantitative $^{13}C$ NMR spectroscopy.

When measuring the ethylene content in polypropylene, a thin film of the sample (thickness about 250 mm) was prepared by hot-pressing. The area of $-CH_2-$ absorption peak (800-650 $cm^{-1}$) was measured with Perkin Elmer FTIR 1600 spectrometer.

The comonomer content C was determined using a film thickness method using the intensity of the quantitative band I(q) and the thickness of the pressed film T using the following relationship: $[I(q) / T]m + c = C$ where m and c are the coefficients determined from the calibration curve constructed using the comonomer contents obtained from $^{13}C$ NMR spectroscopy.

**Xylene cold soluble fraction (XCS wt%)**

The xylene cold soluble fraction (XCS) is determined at 23 °C according to ISO 6427.

**The amorphous content (AM)** is measured by separating the above xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein
"AM%" is the amorphous fraction,
"m0" is initial polymer amount (g)
"m1" is weight of precipitate (g)
"v0" is initial volume (ml)
"v1" is volume of analyzed sample (ml)

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms (second heat) and exotherms (first cooling).

**Intrinsic viscosity (IV)**

The intrinsic viscosity (IV) value increases with the molecular weight of a polymer. The IV values e.g. of the amorphous phase were measured according to ISO 1628/1 (October 1999) in tetraline at 135°C.

**Flexural modulus** was measured according to ISO 178 by using injection molded test specimens as described in EN ISO 1873-2 (80 x 10 x 4 mm)

**Charpy notched impact strength (NIS),**

NIS was determined according to ISO 179-1eA:2000 on V-notched samples of 80x10x4 $mm^3$ at 23 °C (Charpy notched impact strength (23°C)), and -20 °C (Charpy notched impact strength (-20°C)). The test specimens were prepared by injection moulding using a IM V 60 TECH machinery in line with ISO 1872-2. The melt temperature was 230 °C and the mold temperature was 40 °C.

## B. Examples

All polymers were produced in a Borstar pilot plant with a prepolymerisation reactor, one slurry loop reactor and three gas phase reactors. The catalyst used in the polymerisation process was a catalyst 1.9 wt% Ti-Ziegler-Natta-catalyst prepared according to WO 92/19653 with DOP as dialkylphthalat of the formula (I) and ethanol as alcohol with triethylaluminium (TEA) as co-catalyst and diethylaminotriethoxysilane as donor in the ratios indicated in table 1.

Before the polymerisation, the catalyst was prepolymerised with vinylcyclohexane in an amount to achieve a concentration of 200 ppm poly(vinylcyclohexane) (PVCH) in the final polymer. The respective process is described in EP 1 028 984 and EP 1 183 307.

**Table 1:** Preparation of the heterophasic propylene copolymers

| Parameter | unit | IE1 | IE2 | IE3 | IE4 | IE5 | IE6 |
|---|---|---|---|---|---|---|---|
| **Prepolymerisation** | | | | | | | |
| temperature | [°C] | 30 | 30 | 30 | 30 | 30 | 30 |
| pressure | [kPa] | 5500 | 5500 | 5500 | 5500 | 5500 | 5500 |
| Al/donor ratio | [mol/mol] | 0 | 0 | 0 | 0 | 0 | 0 |
| residence time | [h] | 0.3 | 0.3 | 0.3 | 0.3 | 0.3 | 0.3 |
| **Loop** | | | | | | | |
| temperature | [°C] | 75 | 75 | 75 | 75 | 75 | 75 |
| pressure | [kPa] | 5400 | 5400 | 5400 | 5400 | 5400 | 5400 |
| residence time | [h] | 0.5 | 0.5 | 0.5 | 0.5 | 0.5 | 0.5 |
| H2/C3 ratio | [mol/kmol] | 20.7 | 23.9 | 25.4 | 28.0 | 28.5 | 28.7 |
| MFR2 | [g/10 min] | 170 | 290 | 340 | 370 | 360 | 380 |
| XCS | [wt%] | 4.0 | 3.1 | 4.0 | 3.5 | 3.4 | 3.2 |
| Split | [wt%] | 54.3 | 51.6 | 51.9 | 50.3 | 46.3 | 47.3 |
| **GPR 1** | | | | | | | |
| Donor feed | [g/h] | 30 | 30 | 30 | 30 | 30 | 30 |
| temperature | [°C] | 65 | 65 | 65 | 65 | 65 | 65 |
| pressure | [kPa] | 1500 | 1447 | 1360 | 1360 | 1360 | 1360 |
| residence time | [h] | 1.4 | 1.3 | 1.3 | 1.3 | 1.3 | 1.5 |
| H2/C2 ratio | [mol/kmol] | 120 | 130 | 130 | 130 | 145 | 160 |
| C2/C3 ratio | [mol/kmol] | 180 | 185 | 202 | 195 | 210 | 210 |
| Split | [wt%] | 33.7 | 36.4 | 33.1 | 34.7 | 35.7 | 36.7 |
| XCS | [wt%] | 36.8 | 36.8 | 33.5 | 35.4 | 35.4 | 38.0 |
| AM | [wt%] | 35.1 | 35.1 | 32.4 | 33.0 | 34.1 | 36.2 |
| IV of AM | [dl/g] | 2.6 | 2.5 | 2.4 | 2.4 | 2.4 | 2.3 |
| C2 of AM | [wt%] | 23.3 | 26.2 | 23.3 | 23.3 | 24.4 | 24.4 |
| C2 content | [wt%] | 14.2 | 13.8 | 12.3 | 12.6 | 13.4 | 13.4 |
| **GPR2** | | | | | | | |
| Donor feed | [g/h] | 10 | 10 | 10 | 10 | 10 | 10 |
| temperature | [°C] | 70 | 70 | 70 | 70 | 70 | 70 |
| pressure | [kPa] | 2300 | 2300 | 2300 | 2300 | 2300 | 2300 |
| residence time | [h] | 1.08 | 1.14 | 1.16 | 1.14 | 1.37 | 1.41 |

(continued)

| Parameter | unit | IE1 | IE2 | IE3 | IE4 | IE5 | IE6 |
|---|---|---|---|---|---|---|---|
| H2/C2 ratio | [mol/kmol] | 29 | 21 | 32 | 57 | 102 | 101 |
| C2/C3 ratio | [mol/kmol] | 717 | 673 | 661 | 659 | 651 | 659 |
| Split | [wt%] | 8.0 | 8.0 | 10.0 | 9.0 | 11.0 | 8.0 |
| XCS | [wt%] | 40.5 | 40.5 | 40.1 | 40.1 | 40.0 | 40.4 |
| AM | [wt%] | 38.9 | 38.9 | 39.3 | 39.3 | 37.3 | 38.5 |
| IV of AM | [dl/g] | 3.2 | 3.2 | 2.7 | 2.7 | 2.9 | 2.4 |
| C2 of AM | [wt%] | 29.0 | 29.0 | 28.0 | 28.0 | 27.0 | 29.0 |
| C2 content | [wt%] | 14.2 | 13.8 | 12.3 | 12.6 | 13.4 | 13.4 |
| **GPR3** | | | | | | | |
| temperature | [°C] | 65 | 65 | 65 | 65 | 70 | 70 |
| pressure | [kPa] | 2000 | 2000 | 2000 | 2000 | 2000 | 2000 |
| residence time | [h] | 0.59 | 0.53 | 0.50 | 0.52 | 0.62 | 0.81 |
| H2/C2 ratio | [mol/kmol] | 25 | 20 | 27 | 47 | 66 | 69 |
| C2/C3 ratio | [mol/kmol] | 1024 | 989 | 1077 | 1228 | 1227 | 1207 |
| Split | [wt%] | 4.0 | 4.0 | 5.0 | 6.0 | 7.0 | 8.0 |
| XCS | [wt%] | 42.0 | 41.8 | 43.7 | 43.8 | 42.9 | 46.8 |
| AM | [wt%] | 41.0 | 40.8 | 42.1 | 42.8 | 41.9 | 45.8 |
| IV of AM | [dl/g] | 3.2 | 3.2 | 3.0 | 2.8 | 3.1 | 2.6 |
| C2 of AM | [wt%] | 35.2 | 36.8 | 31.3 | 28.8 | 29.0 | 35.9 |
| C2 content | [wt%] | 14.6 | 16.8 | 16.4 | 16.3 | 17.8 | 18.6 |

The Base resins from IE1 - IE6 contained a unimodal propylene homopolymer matrix and a trimodal rubber.

The products from the 3rd gas phase reactor were mixed with a conventional additive package comprising 0.2 wt/% Irganox B225 (antioxidant masterbatch supplied by Ciba Specialty Chemicals, Switzerland) and 0.05 wt% Ca-Stearate (CAS-No. 1592-23-0). The compositions were homogenized and pelletized in a co-rotating a twin screw extruder (PRISM TSE24 L/D ratio 40) with different mixing segments at temperatures between 190 and 240°C at a throughput of 10 kg/h and a screw speed of 50 rpm. The material was extruded to two circular dies of 3 mm diameter into a water bath for strand solidification and then pelletized and dried.

**Table 2:** Properties of the final product

| Parameter | unit | IE 1 | IE 2 | IE3 | IE4 | IE5 | IE6 |
|---|---|---|---|---|---|---|---|
| PP Mixer $MFR_2$ | [g/10min] | 3.2 | 3.2 | 4.5 | 5.5 | 5.4 | 5.4 |
| PP Mixer XCS | [wt%] | 38.7 | 41.8 | 42.3 | 43.8 | 43.9 | 45.2 |
| PP Mixer AM | [wt%] | 36.5 | 40.7 | 39.9 | 41.2 | 42.8 | 44.7 |
| PP Mixer C2 of AM | [wt%] | 32.8 | 36.8 | 28.6 | 28.8 | 31.3 | 29.5 |
| PP Mixer IV of AM | [dl/g] | 3.3 | 3.2 | 3 | 2.8 | 2.7 | 2.7 |
| PP Mixer C2 total | [wt%] | 15.6 | 17 | 16.3 | 16.8 | 18.1 | 18.8 |
| PP Pellet $MFR_2$ | [g/10min] | 3.5 | 3.3 | 4.6 | 5.7 | 5.5 | 5.8 |
| PP Pellet Tm | [°C] | 165.3 | 165.3 | 164.6 | 164.9 | 165.2 | 164.1 |
| PP Pellet Tc | [°C] | 127.3 | 127.5 | 127.9 | 127.5 | 127.3 | 128.6 |

The resins from IE1 to IE3 and IE6 have been further tested. Results can be seen in Table 3.

**Table 3:**

| Parameter | unit | IE 1 | IE 2 | IE3 | IE6 |
|---|---|---|---|---|---|
| Flexural Modulus | MPa | 525 | 432 | 444 | 395 |
| Charpy +23° | kJ/m$^2$ | 84.4 | 84.5 | 83.9 | 78.8 |
| Charpy -20°C | kJ/m$^2$ | 52.0 | 60.3 | 48.2 | 71.2 |

The resin of IE6 was subjected to peroxidic degradation (visbreaking) at 220°C with 2,5-dimethyl-2,5-di(tert-butylperoxy) hexane (DHP from Degussa). The $MFR_2$ was increased up to 30 g/10 min.

**Table 4:** Properties of visbroken polymer of IE6

| | | |
|---|---|---|
| Flexural Modulus | MPa | 380 |
| Charpy +23° | kJ/m$^2$ | 71 |
| Charpy -20°C | kJ/m$^2$ | 63 |

**Claims**

**1.** Heterophasic propylene copolymer comprising

a) a propylene homo- or copolymer matrix with an $MFR_2$ of ≥ 150 g/10 min according to ISO 1133 (230°C, 2.16 kg load) and
b) a trimodal elastomeric propylene copolymer dispersed in said matrix,
wherein

(i) the xylene cold soluble fraction of the heterophasic propylene copolymer at room temperature is present in an amount of 20 to 80 wt% of the of the heterophasic propylene copolymer,
(ii) the amorphous phase of the xylene cold soluble fraction of the heterophasic propylene copolymer has an intrinsic viscosity measured according to ISO 1628-1 (at 135°C in tetraline) of at least 2.5 dl/g
(iii) said of the heterophasic propylene copolymer has a flexural modulus lower than 800 MPa according to ISO 178, a melting temperature measured by DSC from 155 to 170°C and a total ethylene content from 10 to 35 wt%.

**2.** Heterophasic propylene copolymer according to claim 1, wherein the matrix of said heterophasic propylene copolymer is a propylene homopolymer with an $MFR_2$ of ≥ 200 g/10 min up to 1000 g/10min according to ISO 1133 (230°C, 2.16 kg load).

**3.** Heterophasic propylene copolymer according to claim 1 or 2, wherein the trimodal elastomeric propylene copolymer comprises

(x) a first ethylene/propylene copolymer fraction (EPR1)
(y) a second ethylene/propylene copolymer fraction (EPR2)
(z) a third ethylene/propylene copolymer fraction (EPR3),
wherein

- the first ethylene/propylene copolymer fraction comprises 15 to 35 wt% of ethylene, preferably 20 to 30 wt% of ethylene comonomer and an intrinsic viscosity of the amorphous phase of 2 to 4 dl/g according to ISO 1628-1;
- the first ethylene/propylene copolymer fraction differs from the second and the third ethylene/polypropylene copolymer fraction by the comonomer content and/or the intrinsic viscosity of the amorphous phase, whereby the second ethylene/propylene copolymer has a higher comonomer content (wt%) compared to the first ethylene/propylene copolymer and the third ethylene/propylene copolymer has a higher comonomer content than the second ethylene/propylene copolymer.

**4.** Heterophasic propylene copolymer according to claim 3 wherein EPR1 is a propylene rich fraction, EPR3 is an ethylene rich fraction comprising 56 to 85 wt% of ethylene, and EPR2 comprises 55 to 36 wt% of ethylene.

**5.** Heterophasic propylene copolymer according to claim 3 or 4, wherein the trimodal elastomeric propylene copolymer comprises

(x) 40 to 80 wt%, preferably 60 to 75 wt% of EPR1
(y) 10 to 35 wt%, preferably 15 to 30 wt% of EPR2 and
(z) 5 to 30 wt%, preferably 10 to 30 wt% of EPR3,
the sum of (x) + (y) + (z) being 100%.

**6.** Heterophasic propylene copolymer according to any of preceding claims 1 to 5, wherein

(i) the xylene cold soluble fraction of said heterophasic propylene copolymer at room temperature is present in an amount of 30 to 70 wt% of the of the heterophasic propylene copolymer,
(ii) the amorphous phase of the xylene cold soluble fraction of the heterophasic propylene copolymer has an intrinsic viscosity measured according to ISO 1628-1 (at 135°C in tetraline) of at least 2.6 dl/g up to 5.0 dl/g
(iii) said of the heterophasic propylene copolymer has a flexural modulus lower than 700 MPa according to ISO 178, a melting temperature measured by DSC from 158 to 170°C, an $MFR_2$ in the range of 0.3 g/10 min to 30 g/10min according to ISO 1133 (230°C, 2.16 kg load) and a total ethylene content from 13 to 25 wt%.

**7.** Heterophasic propylene copolymer according to any of preceding claims 1 to 5, wherein said heterophasic propylene copolymer has a Charpy notched impact strength according to ISO 179 (1eA) at 23°C of at least 50 $kJ/m^2$, and a Charpy notched impact strength according to ISO 179 (1 eA) at -20°C of at least 30 $kJ/m^2$.

**8.** Process for the preparation of a heterophasic propylene copolymer according to any of preceding claims 1 to 7 said heterophasic propylene copolymer comprises a propylene matrix and a trimodal elastomeric propylene copolymer dispersed in said matrix, wherein said process comprises the steps of

- polymerising propylene and optionally an ethylene comonomer in a first slurry reactor obtaining as slurry reactor product the propylene homo- or copolymer matrix
- transferring the slurry reactor product into a $1^{st}$ GPR
- producing a first ethylene/propylene-copolymer fraction in the propylene matrix in said $1^{st}$ GPR
- transferring the $1^{st}$ GPR product into a $2^{nd}$ GPR
- producing a second ethylene/propylene-copolymer fraction in the presence of said $1^{st}$ GPR product in said $2^{nd}$ GPR,
- transferring the $2^{nd}$ GPR product into a $3^{rd}$ GPR
- producing a third ethylene/propylene-copolymer fraction in the presence of said $2^{nd}$ GPR product in said $3^{rd}$ GPR,
- said $1^{st}$, $2^{nd}$ and $3^{rd}$ ethylene/propylene mixtures have different compositions and recovering the heterophasic propylene copolymer for further processing,

said process being performed in the presence of a catalyst system comprising
- a Ziegler-Natta procatalyst (r) and
- an organometallic cocatalyst (s) and
- an external donor (t) represented by formula (III)

$Si(OCH_2CH_3)_3(NR^3R^4)$
wherein $R^3$ and $R^4$ can be the same or different a represent a hydrocarbon group having 1 to 12 carbon atoms;

**9.** Process according to claim 8, wherein the procatalyst used is a Ziegler-Natta procatalyst, which contains a trans-esterification product of a $C_1$-$C_2$-alcohol and a phthalic ester as internal donor and which is optionally modified with a vinyl compound of formula $CH_2=CH-CHR^1R^2$,
wherein $R^1$ and $R^2$ together form a 5- or 6-membered saturated, unsaturated or aromatic ring or independently represent an alkyl group comprising 1 to 4 carbon atoms.

**10.** Process according to claim 9, wherein the procatalyst used has been prepared by

a) reacting a spray crystallized or emulsion solidified adduct of $MgCl_2$ and a $C_1$-$C_2$-alcohol with $TiCl_4$
b) reacting the product of stage a) with a dialkylphthalate of formula (I)

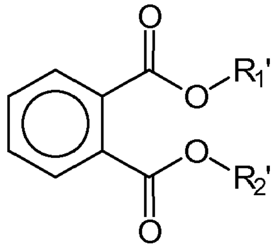

(I)

wherein $R_1'$ and $R_2'$ are independently at least a $C_5$-alkyl
under conditions where a transesterification between said $C_1$-$C_2$-alcohol and said dialkylphthalate of formula (I) takes place to form the internal donor
c) washing the product of stage b) and
d) optionally reacting the product of step c) with $TiCl_4$.

**11.** Process according to claim 10, **characterized in that** the dialkylphthalate of formula (I) is di(ethylhexyl)phthalate and that the $C_1$-$C_2$-alcohol is ethanol.

**12.** Process according to anyone of the preceding claims 8 to 11, wherein the Ziegler-Natta procatalyst is used in the presence of an organometallic cocatalyst selected from the group consisting of trialkylaluminium, dialkyl aluminium chloride and alkyl aluminium sesquichloride.

**13.** Process according to claim 12, **characterized in that** the cocatalyst is triethylaluminium or diethylaluminium chloride.

**14.** Process according to anyone of the preceding claims 8 to 13, wherein the Ziegler-Natta procatalyst is used in the presence of diethylaminotriethoxysilane as external donor.

**15.** Process according to anyone of the preceding claims 8 to 14 wherein the vinyl compound suitable for modifying the procatalyst is selected from vinyl cyclohexene, vinyl cyclopentane, vinyl-2-methyl cyclohexene and vinyl norbornane, 3-methyl-1-butene, styrene, p-methyl-styrene, 3-ethyl-1-hexene or mixtures thereof.

**16.** Process according to anyone of the preceding claims 8 to 15, wherein the process includes a prepolymerisation step.

**17.** Process according to any of preceding claims 8 to 16, wherein the external donor is only fed to the first and to the second gas phase reactor in order to control the production rate with a ratio of amount of external donor fed to the first GPR to the amount of external donor fed to the second GPR is in the range of 2.5 to 6 (wt-ppm).

**18.** Process according to any of preceding claims 8 to 17, wherein a small amount of the total amount of external donor in the range of 0.5 to 10 wt% of the total amount of external donor is fed to the prepolymerisation reactor or to the slurry reactor and the remaining amount is fed to the first and second GPR with a wt-ppm ratio in the range of 2.5 to 6.

Europäisches Patentamt
European Patent Office
Office européen des brevets

# EUROPEAN SEARCH REPORT

Application Number
EP 10 19 0981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2010/149529 A1 (BOREALIS AG [AT]; POSCH WERNER [AT]; TRANNINGER MICHAEL [AT]; LESKINEN) 29 December 2010 (2010-12-29) * the whole document * ----- | 1,8 | INV. C08L23/10 C08F297/08 |
| X | EP 1 659 151 A1 (BOREALIS TECH OY [FI]) 24 May 2006 (2006-05-24) * the whole document * ----- | 1,8 | |
| X | WO 2010/115878 A1 (BOREALIS AG [AT]; BERNREITNER KLAUS [AT]; KNIESEL CLAUDIA [AT]; GUBO R) 14 October 2010 (2010-10-14) * the whole document * ----- | 1 | |
| X | EP 0 699 711 A1 (SHOWA DENKO KK [JP]) 6 March 1996 (1996-03-06) * abstract; claims 1-6 * ----- | 1 | |
| A | WO 2009/129873 A1 (BOREALIS AG [AT]; GREIN CHRISTELLE [AT]; BERNREITER KLAUS [AT]; VESTBE) 29 October 2009 (2009-10-29) * the whole document * ----- | 1-18 | TECHNICAL FIELDS SEARCHED (IPC) C08L C08F |

The present search report has been drawn up for all claims

1

| Place of search | Date of completion of the search | Examiner |
|---|---|---|
| The Hague | 17 January 2011 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 10 19 0981

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2011

| Patent document cited in search report | | Publication date | Patent family member(s) | | | Publication date |
|---|---|---|---|---|---|---|
| WO 2010149529 | A1 | 29-12-2010 | NONE | | | |
| EP 1659151 | A1 | 24-05-2006 | AT | 419304 | T | 15-01-2009 |
| | | | CN | 101061173 | A | 24-10-2007 |
| | | | EP | 1833909 | A1 | 19-09-2007 |
| | | | WO | 2006053661 | A1 | 26-05-2006 |
| | | | ES | 2318562 | T3 | 01-05-2009 |
| | | | US | 2007296120 | A1 | 27-12-2007 |
| WO 2010115878 | A1 | 14-10-2010 | NONE | | | |
| EP 0699711 | A1 | 06-03-1996 | DE | 69501298 | D1 | 05-02-1998 |
| | | | DE | 69501298 | T2 | 14-05-1998 |
| | | | JP | 2839840 | B2 | 16-12-1998 |
| | | | JP | 8059921 | A | 05-03-1996 |
| | | | US | 5563194 | A | 08-10-1996 |
| WO 2009129873 | A1 | 29-10-2009 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0887379 A
- WO 9212182 A
- WO 9924478 A
- WO 9924479 A
- WO 0068315 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 0491566 A
- WO 9924503 A
- EP 1538167 A
- EP 1028984 A
- EP 1183307 A